# EUROPEAN PATENT APPLICATION

(11) **EP 4 498 583 A1**
(43) Date of publication of application: **29.01.2025**
(21) Application number: 23187816.6
(22) Date of filing: 26.07.2023
(51) Int. Cl.: H02M 1/00, H02M 7/483, H02M 7/487, H02M 7/49

(54) **MULTILEVEL MODULATION**

(71) Applicant: Rimac Technology LLC, 10431 Sveta Nedelja (HR)
(72) Inventor: KACETL, Jan, 530 02 Pardubice (CZ); KACETL, Tomás, 530 03 Pardubice (CZ); DILOV, Wasim Sarwar, 10000 Zagreb (HR)
(74) Representative: Hoffmann Eitle

(57) **Abstract**

There is provided a method for controlling a multilevel converter comprising a plurality of energy sources and a plurality of power converter modules, each power converter module comprising at least two switching elements, the method comprising:
-associating, for a first control period from a plurality of consecutive control periods, a value of a first parameter to each one of the plurality of power converter modules, the value of the first parameter being a variable value;
-determining, for the end point of the first control period, a characteristic of the conduction state of each one of the plurality of power converter modules, the characteristic of the conduction state being one of a first predetermined characteristic and a second predetermined characteristic;
-obtaining a required output signal of the plurality of power converter modules for a second control period from the plurality of consecutive control periods, the second control period being after the first control period;
-for each change of the amplitude of the required output signal between a first amplitude level and a second amplitude level in the second control period, controlling the conduction state of at least one of the plurality of power converter modules in the second control period based on the value of the first parameter associated to the at least one power converter module for the first control period and the determined characteristic of the conduction state of the at least one power converter module for the end point of the first control period.

## Description

### Technical field

The present invention relates to the technical field of multilevel modulation. More particularly, the present invention relates to a multilevel converter and a method for controlling a multilevel converter.

### Background

A multilevel converter is a power conversion system that can generate a multistep voltage waveform from several DC input voltages. The multistep voltage waveform has at least three levels. The number of levels of the multilevel converter can be defined as the number of steps or constant voltage levels that can be generated by the multilevel converter between the output terminal and any arbitrary internal reference node.

A multilevel converter is described for example in J. Rodriguez at al.: "Multilevel converters: An enabling technology for high-power applications", Proceedings of the IEEE, vol. 97, no. 11, pages 1786-1817, 2009.

The multilevel converter finds a vast application in many technology fields, amongst others in the field of power conversion, for example in motor vehicles.

There are many different topologies for a multilevel converter, like for example, a diode clamped multilevel converter, flying capacitors multilevel converter and cascaded multilevel converter, but also combinations and variations thereof are readily utilized. Some of these topologies, like the flying capacitors multilevel converter and the cascaded multilevel converter have a modular structure composed of multiple power converter modules, also called cells.

The output voltage of a multilevel converter is typically synthesized by a multilevel modulation technique. Several multilevel modulation techniques are applicable to a multilevel converter. The modulation techniques for a multilevel converter can be classified depending on the average switching frequency with which they operate into low switching frequency technique and high switching frequency technique. An example of a high frequency switching technique is a multicarrier pulsed width modulation (PWM). Examples of a multicarrier PWM are a phase shifted carrier PWM (PSC PWM) and a level shifted carrier PWM (LSC PWM) which are among the most popular modulation techniques.

These modulation techniques can be easily implemented on a microcontroller, a field programmable gate array (FPGA) or an application specific integrated circuit (ASIC). These multicarrier PWM techniques use a carrier waveform signal for each of the power converter modules of the multilevel converter.

The phase shifted carrier PWM (PSC PWM) evenly distributes the conduction times of the individual power converter modules of the multilevel converter and effectively increases the effective output switching rate of the multilevel converter but does not allow for active control of the conduction times of the individual power converter modules to balance them in the distribution of the workload between the individual power converter modules.

The level shifted carrier PWM (LSC PWM) does not distribute the conduction times of individual power converter modules evenly but utilizes, as a balancing algorithm, sorting based algorithm of the individual power converter modules of the multilevel converter and carrier waveform signals swapping.

Hence, each modulation technique has its own drawbacks and advantages, and the applied modulation technique depends strongly on the field of application of the multilevel converter. Accordingly, the balancing in the distribution of the workload between the individual power converter modules of the multilevel converter depends strongly on the applied modulation technique.

A method for controlling a multilevel converter is described for example in US 2021/0408935 A1. However, the method described in US 2021/0408935 A1 is not suitable for a multilevel pulsed width modulation (PWM). Furthermore, the balancing relies fully on feedback, so that it produces potential harmful low frequency current ripple on power converter module level.

Therefore, there is a need for improved modulation method for a multilevel converter.

Accordingly, it is an object of the present invention to provide for an improved modulation method for a multilevel converter.

### Summary

The mentioned problems and drawbacks are addressed by the subject matter of the independent claims. Further preferred embodiments are defined in the dependent claims.

In a first aspect of the present invention there is provided a method for controlling a multilevel converter comprising a plurality of energy sources and a plurality of power converter modules, each power converter module comprising at least two switching elements, the method comprising:
- associating, for a first control period from a plurality of consecutive control periods, a value of a first parameter to each one of the plurality of power converter modules, the value of the first parameter being a variable value;
- determining, for the end point of the first control period, a characteristic of the conduction state of each one of the plurality of power converter modules, the characteristic of the conduction state being one of a first predetermined characteristic and a second predetermined characteristic;
- obtaining a required output signal of the plurality of power converter modules for a second control period from the plurality of consecutive control periods, the second control period being after the first control period;
- for each change of the amplitude of the required output signal between a first amplitude level and a second amplitude level in the second control period, controlling the conduction state of at least one of the plurality of power converter modules in the second control period based on the value of the first parameter associated to the at least one power converter module for the first control period and the determined characteristic of the conduction state of the at least one power converter module for the end point of the first control period.

In a second aspect of the present invention there is provided a multilevel converter comprising a plurality of energy sources and a plurality of power converter modules, each power converter module comprising at least two switching elements, the multilevel converter comprising means adapted to carry out the steps of the method of the first aspect.

In a third aspect of the present invention there is provided a computer program comprising instructions which, when the program is executed on a computer causes the computer to execute the steps of the method of the first aspect.

### Brief description of the drawings

Embodiments of the present invention, which are presented for better understanding the inventive concepts, but which are not to be seen as limiting the invention, will now be described with reference to the figures in which:
- Figure 1: shows schematically the required output signal of a multilevel converter and the scheduling of the individual power converter modules according to a prior-art solution;
- Figure 2: is a flow chart showing the steps of the method for controlling a multilevel converter according to an embodiment of the present invention;
- Figure 3: is a schematic block diagram of a multilevel converter according to an embodiment of the present invention;
- Figures 4A and 4B: shows information for controlling the conduction state of the individual power converter modules according to an embodiment of the present invention;
- Figure 5: shows schematically the required output signal of a multilevel converter and the scheduling of the individual power converter modules according to an embodiment of the present invention;
- Figure 6: shows a control block diagram for carrying out the method for controlling the multilevel converter according to an embodiment of the present invention;
- Figure 7: shows a control block diagram for carrying out the method for controlling the multilevel converter according to an embodiment of the present invention;
- Figure 8: shows a control block diagram for carrying out the method for controlling the multilevel converter according to an embodiment of the present invention;
- Figure 9: shows a control block diagram for carrying out the method for controlling the multilevel converter according to an embodiment of the present invention;

### Detailed description

In a multilevel converter, depending on how the individual power converter modules of the multilevel converter are connected together, the distribution of energy conversion (workload or load) between the different power converter modules of the multilevel converter can be controlled. For the distribution of the energy conversion and hence for the distribution of the workload (load) between the power converter modules of the multilevel converter, at least the following factors play a role: i) the modulation technique to be applied to the power converter modules of the multilevel converter, which comprises determining how many power converter modules will participate in the energy conversion, which in turn depends on the number of required voltage levels of the demanded output voltage of the multilevel converter, and ii) the scheduling of the individual power converter modules of the multilevel converter for energy conversion, which comprises determining which power converter modules will participate in the distribution of the energy conversion (workload or load). The scheduling controls therefore the distribution of the workload (load) between the individual power converter modules of the multilevel converter.

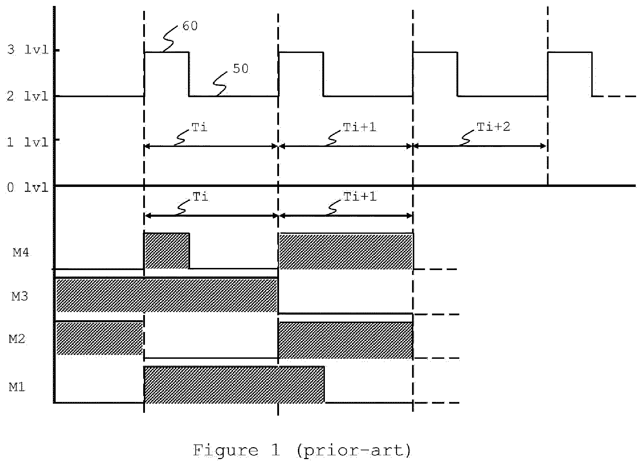

Figure 1 in the upper section shows schematically an example of a required output signal of a multilevel converter. More specifically, figure 1 in the upper section shows schematically an example of a required output voltage from a multilevel converter. In this example, the required output voltage of the multilevel converter is modulated between the second voltage level (2 lvl) and the third voltage level (3 lvl). The vertical dashed lines are indicating the border between the individual control periods Ti, Ti+1, Ti+2... In other words, each individual control period Ti extends between two vertical dashed lines. In this example, in each control period, the required output voltage has a base line 50 corresponding to the second voltage level (2 lvl) and a step 60 to the third voltage level (3 lvl). In this example, the step occurs at the beginning of each control period Ti and has a duration of a fraction of the control period Ti. The control period Ti may be seen as corresponding to the period of the required output signal.

The bottom part of figure 1 shows the scheduling of the individual power converter modules of a multilevel converter according to a prior-art solution for achieving the required output voltage of the multilevel converter in each control period (Ti) shown in the upper part of figure 1. There is shown in figure 1 the scheduling of the individual power converter modules for the case of four power converter modules (M1, M2, M3 and M4).

According to the prior-art solution, for each control period Ti, Ti+1, Ti+2... a new combination of power converter modules is selected to be placed in an active state (represented with filling with inclined lines) from an inactive state or vice versa or to maintain the active state or the inactive state from the immediately preceding control period. The selection of the power converter modules is normally based on at least one parameter such as the temperature of the power converter modules or the output voltage of the string of power converter modules. Power converter modules are in an active state (and hence are scheduled for energy conversion) if they actively contribute to energy conversion in the multilevel converter, otherwise they are considered to be in an inactive state.

For the control period Ti, the power converter modules M1 and M3 are controlled to be in an active state during the entire length of the control period Ti. These power converter modules (M1 and M3) achieve the base line 50 of the required output voltage corresponding to the second voltage level (2 lvl). The power converter module M4 is controlled to be in an active state only for a fraction of the control period Ti to thereby achieve the step 60 in the required output voltage from the second voltage level (2 lvl) to the third voltage level (3 lvl), the length of the fraction corresponding to the duration of the step 60. The power converter module M2 is controlled to be in an inactive state during the entire length of the control period Ti.

For the subsequent control period Ti+1, according to the prior-art solution, again a new combination of power converter module is selected to achieve the required output voltage in the subsequent control period Ti+1, based on at least one of the above-mentioned at least one parameter. In the control period Ti+1, the power converter modules M2 and M4 are controlled to be in an active state during the entire length of the control period Ti+1 to thereby achieve the base line 50 of the required output voltage corresponding to the second voltage level (2 lvl) while the power converter module M1 is controlled to be in an active state only for a fraction of the control period Ti to thereby achieve the step 60 in the required output voltage from the second voltage level (2 lvl) to the third voltage level (3 lvl), the length of the fraction corresponding to the duration of the step 60. The power converter module M3 is controlled to be in an inactive state during the entire length of the control period Ti+1.

As can be seen in figure 1, between the control periods Ti and Ti+1, three power converter modules, that is the power converter modules M2, M3 and M4 switch the conduction state between an active state and an inactive state. This increases the switching loss in the multilevel converter according to the prior-art solution. In addition, it is difficult to achieve balancing of the conduction times between the different power converter modules.

The present invention proposes a modulation technique for a multilevel converter which, instead of utilizing scheduling of power converter modules for each control period, utilizes scheduling of the power converter modules for events in each control periods. In scheduling for events in each control period, the present invention prioritizes power converter modules to be used and differentiates between the power converter modules based on the conduction state of the power converter modules in a preceding control period. This achieves balancing of the conduction times between the different power converter modules and reduces the number of switching of the conduction states of the individual power converter modules between control periods, thereby reducing the switching losses.

An event in each control period in the sense of the present invention is a change of the required output signal of the multilevel converter between a first amplitude level of the required output signal of the multilevel converter and a second amplitude level of the required output signal of the multilevel converter. The output signal of the multilevel converter is normally a voltage signal. The required output signal may correspond to or represent the required (desired or demanded) voltage of the multilevel converter. Accordingly, the first amplitude level and the second amplitude level may correspond to voltage levels of the required voltage of the multilevel converter.

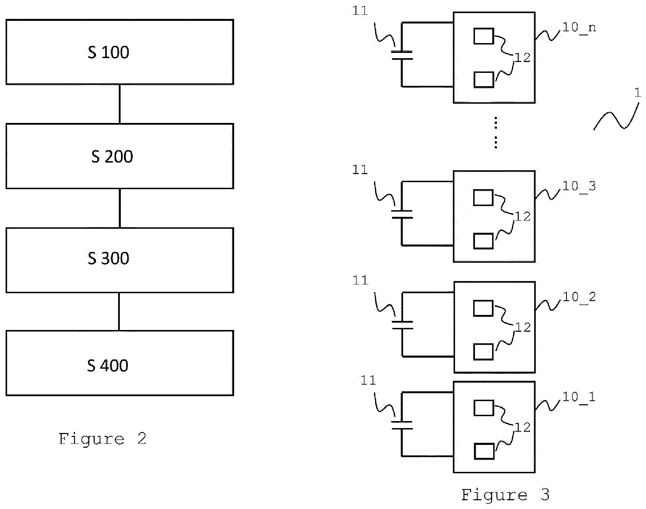

Figure 2 is a flow chart showing the steps of the method for controlling a multilevel converter according to an embodiment of the present invention.

Figure 3 shows a schematic block diagram of the multilevel converter 1 according to the embodiment of the present invention. The multilevel converter 1 comprises a plurality of energy sources 11 and a plurality of power converter modules 10_1, 10_2, 10_3,...,10_i,..., 10_n (i=1....n). Each power converter module 10_i comprises at least two switching elements 12. Each one of the at least two switching elements 12 may be a solid-state switching element, like for example a two terminal solid-state switch or a three terminal solid-state switch. Examples of two-terminal solid-state switch include, without limiting the present invention, a PiN (positive-intrinsic-negative) diode and Schottky diode. Examples of a three-terminal solid-state switch include, without limiting the present invention, MOSFET, JFET, IGBT, BJT and thyristor.

It is to be understood that even though figure 3 shows each energy source 11 as being connected to a respective one of the power converter modules 10_1, 10_2, 10_3, ..., 10_i, ...10_n (i is an index to replace any one of 1 to n), this is not limiting, and other connecting configurations are also possible. The energy source 11 may be any kind of energy source, like for example a battery, a photovoltaic cell, a fuel cell, an electromechanical power converter or a capacitive energy source. It is further to be understood that the present invention is not limited to a specific topology of the multilevel converter 1. For example, the power converter modules 10_1, 10_2, 10_3, ..., 10_n may be connected in a string and a plurality of such strings may be provided in the multilevel converter 1. Each string may represent a phase or an arm of the multilevel converter 1.

According to the method for controlling the multilevel converter 1 of the embodiment of the present invention, the method comprises, in step S 100, associating, for a first control period from a plurality of consecutive control periods, a value of a first parameter to each one of the plurality of power converter modules 10_1, 10_2, 10_3, ..., 10_n. The value of the first parameter is a variable value. In one or more embodiments of the present invention, the value of the first parameter may be a variable numerical value.

The method further comprises, in step S 200, determining, for the end point of the first control period, a characteristic of the conduction state of each one of the plurality of power converter modules 10_1, 10_2, 10_3, ..., 10_n. The characteristic of the conduction state is one of a first predetermined characteristic and a second predetermined characteristic.

In one or more embodiments of the present invention, the end point of the first control period may correspond to the real end time point of the first control period, while in other embodiments of the present invention, the end point of the first control period may be a time point within a time period with a predetermined length and an end point corresponding to the real end time point of the first control period, and hence end point of the first control period may be a time point before the real end time point of the first control period. In other words, the definition of the end point of the first control period in one or more embodiments of the present invention may depend on the accuracy of the determination of the end point of the first control period which in turn may depend on the processing accuracy and processing speed (for example clock cycle) of the one or more hardware components responsible for the determination of the end point of the first control period.

The method further comprises, in step S 300, obtaining a required output signal of the plurality of power converter modules 10_1, 10_2, 10_3, ..., 10_n for a second control period from the plurality of consecutive control periods. The second control period is after the first control period. The second control period may be a consecutive period to the first control period, however, this is not necessary. As elaborated above, the required output signal may correspond to or represent the required (desired or demanded) voltage (signal) of the multilevel converter 1.

The method further comprises, in step S 400, for each change of the amplitude of the required output signal in the second control period between a first amplitude level and a second amplitude level, controlling the conduction state of at least one of the plurality of power converter modules 10_1, 10_2, 10_3, ..., 10_n in the second control period based on the value of the first parameter associated to the at least one power converter module for the first control period and the determined characteristic of the conduction state of the at least one power converter module for the end point of the first control period.

In step S 400, the controlling of the conduction state of the at least one of the plurality of power converter modules 10_1, 10_2, 10_3, ..., 10_n may comprise any one of switching the conduction state of the at least one power converter module, placing the at least one power converter module in a parallel configuration state, placing the at least one power converter module in a bypassing state, and inverting the output voltage of the at least one power converter module. The term "placing" is to be understood as controlling the at least one power converter module to be in a parallel configuration state or in a bypassing state or issuing one or more commands for controlling the at least one power converter module to be in a parallel configuration state or in a bypassing state.

Inverting the output voltage of the at least one power converter module may comprise controlling the at least one power converter module to generate the opposite voltage with respect to the generated voltage before controlling the at least one power converter module to invert the output voltage. In other words, in an example, inverting the output voltage of the at least one power converter module 10_i may correspond to inverting the output voltage of the at least one power converter module 10_i from +20V to -20V. Hence, the power converter module remains in an active conduction state, however its output voltage is inverted.

Switching the conduction state of the at least one power converter module may comprise switching between a conduction state and a non-conduction state of the at least one power converter module 10_i or vice versa.

The non-conduction state of the at least one power converter module 10_i does not necessarily mean that for the at least one power converter module 10_i which is in a non-conduction state each element of the power converter module 10_i is in a non-conduction state. For example, when the at least one power converter module 10_i is in the non-conduction state, at least one of the two switching elements 12 of the power converter module 10_i may be in a conduction state to thereby bypass the energy source 11 connected to the power converter module 10_i. The at least one power converter module 10_i being in a non-conduction state may be understood therefore as the at least one power converter module 10_i not (actively) contributing to the distribution of the energy conversion (workload, load) in the multilevel converter 1. The output signal of the at least one power converter module 10_i in the non-conduction state may have a value of 0V. Hence, the at least one power converter module 10_i being in a non-conduction state may be understood as the at least one power converter module 10_i not contributing to the generation of the required output voltage of the multilevel converter 1 by adding a voltage level to the required output voltage. It is noted however, that this does not exclude the "unintentional" generation of a voltage, for example parasitic voltage.

In an embodiment of the present invention, the first predetermined characteristic of the conduction state may indicate an active conduction state, and the second predetermined characteristic of the conduction state may indicate an inactive conduction state.

The active conduction state may also be called conduction state. The at least one power converter module 10_i being in the conduction state may be understood as the at least one power converter module 10_i (actively) contributing to the distribution of the energy conversion (workload, load) in the multilevel converter 1. More specifically, the at least one power converter module 10_i being in the conduction state may be understood as the at least one power converter module 10_i (actively) contributing to the generation of the required output voltage of the multilevel converter 1.

In embodiments of the present invention, the inactive conduction state may be any one of a non-conduction state and a parallel configuration state. A power converter module 10_i which is in the parallel configuration state does not contribute to the generation of the required output voltage of the multilevel converter 1, but, may only share the current load with at least one other power converter module with which it is parallel connected. In embodiments of the present invention, a power converter module may be in an inactive state if the power converter module is placed in a bypassing state.

Each power converter module may be placed in the parallel configuration state or in the bypassing state from the conduction state as one possible way of controlling of the conduction state of the at least one of the plurality of power converter modules 10_1, 10_2, 10_3, ..., 10_n.

In an embodiment of the present invention, the first parameter may indicate a priority of the corresponding power converter module for selecting the power converter module 10_i for controlling the conduction state of the corresponding selected power converter module 10_i in the second control period. Hence, according to the method for controlling the multilevel converter 1 of the embodiment of the present invention, controlling the conduction state of the at least one of the plurality of power converter modules 10_1, 10_2, 10_3, ..., 10_n in the second control period based on the value of the first parameter associated to the at least one power converter module 10_i for the first control period and the determined characteristic of the conduction state of the at least one power converter module 10_i for the end point of the first control period may comprise selecting the at least one of the plurality of power converter modules 10_1, 10_2, 10_3, ..., 10_n based on the priority of the at least one power converter module 10_i and the determined characteristic of the conduction state of the at least one power converter module 10_i for the end point of the first control period and controlling the conduction state of the selected at least one of the plurality of power converter modules 10_1, 10_2, 10_3, ..., 10_n in the second control period by way of any one of switching the conduction state of the at least one power converter module, placing the at least one power converter module in a parallel configuration state, placing the at least one power converter module in a bypassing state, and inverting the output voltage of the at least one power converter module.

The priority of the corresponding power converter module 10_i for selecting the power converter module 10_i for controlling the conduction state of the selected power converter module 10_i in the second control period may depend on the actual application and the application environment of the multilevel converter 1. Therefore, the priority may be determined based on various parameters depending on the actual application and the application environment of the multilevel converter 1. By way of example, the priority may depend on the current direction in the system, for example the battery system in which the multilevel converter 1 may be applied. When the battery system is charging or discharging, the priority may be determined based on the state of charge of the energy sources. When the battery system is discharging, the power converter module 10_i with the highest state of charge may have the highest priority for selecting it for controlling its conduction state in the second control period, while when the battery system is charging, the power converter module 10_i with the lowest state of charge may have the highest priority for selecting it for controlling its conduction state in the second control period. In other applications or application environments, the priority may be determined based on the temperature of the energy sources. By way of example, the power converter module with the highest temperature may have the lowest priority for selecting the power converter module 10_i for controlling the conduction state of the corresponding power converter module 10_i in the second control period.

In one embodiment of the present invention, the first parameter associated to each one of the plurality of power converter modules 10_1, 10_2, 10_3, ..., 10_n and the characteristic of the conduction state of each one of the plurality of power converter modules 10_1, 10_2, 10_3, ..., 10_n may be stored in one or more lists or tables. In other words, in one embodiment of the present invention, the association of the value of the first parameter to each one of the plurality of power converter modules 10_1, 10_2, 10_3, ..., 10_n, for the first control period may be performed by way of using lists or tables. The lists or the tables may also store the state (or information indicating the conduction state) of each one of the plurality of power converter modules 10_1, 10_2, 10_3, ..., 10_n for the end point of the first control period.

The determining of the characteristic of the conduction state of each one of the plurality of power converter modules 10_1, 10_2, 10_3, ..., 10_n for the end point of the first control period may be performed based on a control command sent to each one of the plurality of power converter modules 10_1, 10_2, 10_3, ..., 10_n or based on any one of output current or voltage of the string of power converter modules 10_1, 10_2, 10_3, ..., 10_n for the end point of the first control period. The control command may be sent for the entire first period, for a fraction of the first period or may even be sent for several control periods in advance.

In embodiments of the present invention, the control command sent to each one of the plurality of power converter modules 10_1, 10_2, 10_3, ..., 10_n may include the conduction time of the corresponding power converter module 10_i in the first control period. The conduction time may indicate the time period during which the corresponding power converter module 10_i is to or is not to (actively) contribute to the distribution of the energy conversion (workload, load) in the multilevel converter 1 in the first control period. Therefore, the determining of the characteristic of the conduction state of each one of the plurality of power converter modules 10_1, 10_2, 10_3, ..., 10_n for the end point of the first control period may be performed based on the conduction time of the corresponding power converter module 10_i in the first control period. However, this is not to be seen as limiting to the present invention.

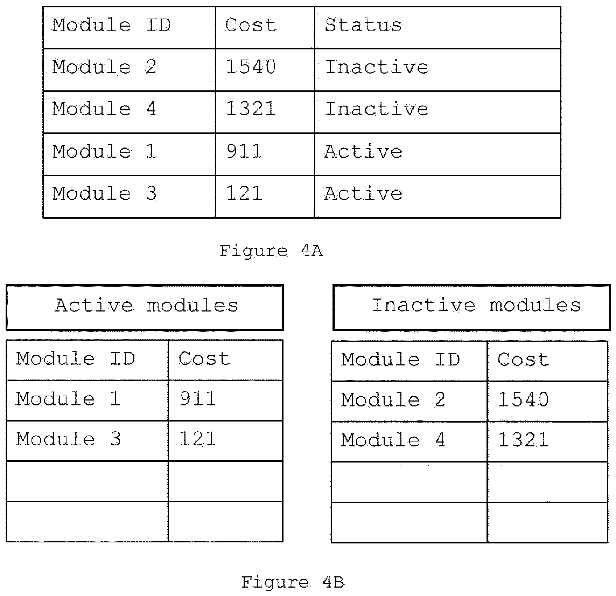

Exemplary embodiments for storing the first parameter and the characteristic of the conduction state in one and in two tables are shown in figure 4A and figure 4B. In these embodiments of the present invention, the multilevel converter 1 comprises four power converter modules, however, this is not limiting to the present invention.

Figure 4A shows an embodiment of the present invention in which the first parameter and the characteristic of the conduction state are stored in one table for each one of the plurality of power converter modules 10_1, 10_2, 10_3, ..., 10_n for the end point of the first control period. Each power converter module is assigned a power converter module identification, also called "module ID". For example, each power converter module is assigned a module ID comprising "module 1", "module 2", "module 3", "module 4". The table comprises accordingly three columns. In the first column, the module ID of each of the power converter modules are stored. In the second column, the first parameter associated to each of the power converter modules is stored. The first parameter may also be called "Cost". The "Cost" may be seen as a cost for using the corresponding power converter module energy conversion (workload distribution) in the multilevel converter 1. The characteristic of the conduction state may also be called "Status" and is stored in the third column. In this embodiment of the present invention, the power converter modules are ordered in the table based on a descending order of the "Cost".

Figure 4B shows one embodiment of the present invention in which two tables are used. One table is used for the power converter modules for which the characteristic of the conduction state for the end point of the first control period is the first predetermined characteristic and another table is used for the power converter modules for which the characteristic of the conduction state for the end point of the first control period is the second predetermined characteristic.

In an embodiment of the present invention, the method may further comprise ordering the plurality of power converter modules 10_1, 10_2, 10_3, ..., 10_n based on the value of the first parameter associated to each one of the plurality of power converter modules 10_1, 10_2, 10_3, ..., 10_n for the first control period. The ordering the plurality of power converter modules 10_1, 10_2, 10_3, ..., 10_n based on the value of the first parameter may comprise ordering the plurality of power converter modules 10_1, 10_2, 10_3, ..., 10_n in a descending or an ascending order of the corresponding value of the first parameter. However, the ordering is optional.

In the embodiments of the present invention shown in figures 4A and 4B, the ordering the plurality of power converter modules 10_1, 10_2, 10_3, ..., 10_n based on the value of the first parameter is ordering in a descending order of the corresponding value of the first parameter, however this is not limiting. In the embodiments of the present invention in which the first parameter indicates the priority of the corresponding power converter module 10_i for selecting the power converter module for controlling the conduction state of the corresponding power converter module 10_i in the second control period, the ordering of the power converter modules 10_1, 10_2, 10_3, ..., 10_n is according to a descending priority.

In a further embodiment of the present invention, each row in the one table, for example the one table shown in figure 4A or the two tables, for example the two tables shown in figure 4B may be assigned to a specific power converter module 10_i. The one table or the two tables may then be searched for identifying the power converter modules in an ascending or descending order of the value of the first parameter. In this embodiment of the present invention, the ordering the plurality of power converter modules 10_1, 10_2, 10_3, ..., 10_n based on the value of the first parameter may be therefore omitted.

In an embodiment of the present invention, the first amplitude level is lower than the second amplitude level. By way of example, the first amplitude level may correspond to the second voltage level (2 lvl) and the second amplitude level may correspond to the third voltage level (3 lvl) in the upper section of figure 1.

For each change of the amplitude of the required output signal from the first amplitude level to the second amplitude level the method may comprise controlling the conduction state of one or more of the plurality of power converter modules 10_1, 10_2, 10_3, ..., 10_n for which the characteristic of the conduction state is the second predetermined characteristic. The controlling may comprise selecting, in order from a value of the first parameter indicating the highest priority to a value of the first parameter indicating the lowest priority, one or more of the power converter modules 10_1, 10_2, 10_3, ..., 10_n for which the characteristic of the conduction state is the second predetermined characteristic, for controlling the conduction state of the selected one or more power converter modules 10_1, 10_2, 10_3, ..., 10_n. In embodiments of the present invention in which the plurality of power converter modules 10_1, 10_2, 10_3, ..., 10_n are ordered in the one table or the two tables based on the value of the first parameter associated to each one of the plurality of power converter modules 10_1, 10_2, 10_3, ..., 10_n, the ordering may simplify the identifying and the selecting of the one or more of the power converter modules 10_1, 10_2, 10_3, ..., 10_n.

For each change of the amplitude of the required output signal from the second amplitude level to the first amplitude level the method may comprise: controlling the conduction state of one or more of the power converter modules 10_1, 10_2, 10_3, ..., 10_n for which the characteristic of the conduction state is the first predetermined characteristic. The controlling may comprise selecting, in order from a value of the first parameter indicating the lowest priority to a value of the first parameter indicating the highest priority, one or more power converter modules 10_1, 10_2, 10_3, ..., 10_n for which the characteristic of the conduction state is the first predetermined characteristic, for controlling the conduction state of the selected one or more power converter modules 10_1, 10_2, 10_3, ..., 10_n. Again, in embodiments of the present invention in which the plurality of power converter modules 10_1, 10_2, 10_3, ..., 10_n are ordered in the one table or the two tables based on the value of the first parameter associated to each one of the plurality of power converter modules 10_1, 10_2, 10_3, ..., 10_n, the ordering may simplify the identifying and the selecting of the one or more of the power converter modules 10_1, 10_2, 10_3, ..., 10_n.

In one or more embodiments of the present invention, the controlling the conduction state of one or more of the power converter modules 10_1, 10_2, 10_3, ..., 10_n for which the characteristic of the conduction state is the first predetermined characteristic, may comprise inverting the output voltage of the one or more of the power converter modules 10_1, 10_2, 10_3, ..., 10_n for which the characteristic of the conduction state is the first predetermined characteristic. This may be the case for full bridge power converter modules. In full bridge power converter modules, the required output voltage may be reduced from the second amplitude level to the first amplitude level (in particular in cases in which the first amplitude level and the second amplitude level differ in one or two voltage levels) by inverting or changing the output voltage of a power converter module for which the characteristic of the conduction state is the first predetermined characteristic.

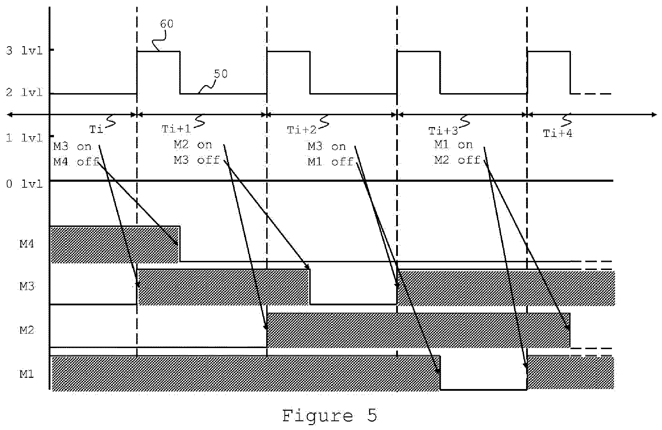

Figure 5 shows schematically an example of the required output signal (required output voltage) of the multilevel converter 1 in an embodiment of the present invention and shows the scheduling of the individual power converter modules 10_1, 10_2, 10_3, ..., 10_n of the multilevel converters 1 according to an embodiment of the present invention for achieving the required output signal of the multilevel converter 1. In this embodiment of the present invention, the scheduling is shown for four power converter modules (M1, M2, M3 and M4), however, this is not limiting. The multilevel converter 1 may comprise only four power converter modules, however it may comprise more than four power converter modules.

In this embodiment of the present invention, the required output voltage of the multilevel converter 1 is modulated between the second voltage level (2 lvl) and the third voltage level (3 lvl) . However, this is not limiting to the present invention.

The vertical dashed lines are indicating the border between the individual control periods Ti, Ti+1, Ti+2, Ti+3, Ti+4... In other words, each individual control period Ti extends between two vertical dashed lines. In this embodiment of the present invention, in each control period, the required output voltage has a base line 50 corresponding to the second voltage level (2 lvl) and a step 60 to the third voltage level (3 lvl). In this embodiment of the present invention, the step 60 occurs at the beginning (start point) of each control period Ti and has a duration of a fraction of the control period Ti. However, this is not limiting, and the step may occur, for example, in the middle of each control period or at the end portion of the control period, for example a step to the second voltage level (2lvl) may be aligned with the end point of the control period. Preferably, the part of the required output voltage corresponding to the third voltage level (3 lvl) may be aligned with the middle of the control period (center-aligned). Further, in embodiments of the present invention, within a control period, the required output signal may have more than one step. The control period Ti may be seen as corresponding to the period of the required output signal.

The second voltage level (2 lvl) may correspond to the above described first amplitude level and the third voltage level (3 lvl) may correspond to the above described second amplitude level.

The change of the required output voltage from the second voltage level (2 lvl) to the third voltage level (3 lvl) may also be called rising edge, while the change of the voltage from the third voltage level (3 lvl) to the second voltage level (2 lvl) may also be called falling edge of the required output voltage. Hence, in this embodiment of the present invention, within each control period, two events occur in the required output signal: a rising edge at the start of each control period and a falling edge within each control period. However, this is not limiting to the present invention. In other words, the rising edge does not need to be at the start of each control period and in each control period the required output signal may have more than one rising edge and/or falling edge. The falling edge may also be at the end of the control period.

In this embodiment of the present invention, it is assumed that the first control period and the second control period are consecutive control periods, however, this is not limiting to the present invention. Further, in this embodiment of the present invention it is assumed that the inactive conduction state is the non-conduction state and it is assumed that controlling the conduction state of the at least one power converter module 10_i comprises switching the conduction state of the at least one power converter module from the conduction to the non-conduction state and vice versa. In the bottom section of figure 5, the active conduction state of each power converter module is represented with inclined lines.

As elaborated above, step S 200 comprises determining, for the end point of the first control period, a characteristic of the conduction state of each one of the plurality of power converter modules, the characteristic of the conduction state being one of the first predetermined characteristic and the second predetermined characteristic.

For the control period Ti being the first control period, by applying step S 200, the following is determined for the end point of the control period Ti (first control period):
M1-active state, M2-inactive state, M3-inactive, M4-active state.

In this embodiment of the present invention, for the first control period Ti, the value of the first parameter associated to M3 indicates higher priority than the value of the first parameter associated to M2 and for the first control period Ti the value of the first parameter associated to M4 indicates lower priority than the value of the first parameter associated to M1. Details of determining the value of the first parameter in embodiments of the present invention are described further below.

For the rising edge of the required output signal at the start of the second control period Ti+1, by applying step S 400, M3 is controlled so that its conduction state is switched at the rising edge (here at the start of the second control period). Since M1 and M4 at the start of the second control period Ti+1 maintain the conduction state from the first control period Ti, M1, M3 and M4 generate the required output voltage which has a rising edge from the second voltage level to the third voltage level (step 60 of the required output voltage).

For the falling edge of the required output signal in the second control period Ti+1, by applying step S 400, M4 is controlled so that its conduction state is switched at the falling edge. Since M3 and M1 maintain the conduction state, M1 and M3 generate the base line 50 of the required output voltage. Hence, in the second control period Ti+1, two power converter modules (M3 and M4) switch the conduction state between an active state and an inactive state. In the prior-art solution, as elaborated above, three power converter modules (M1, M3 and M4) switch the conduction state between an active state and an inactive state.

For the control period Ti+2 being the second control period, by applying step S 200, the following is determined for the end point of the control period Ti+1 (first control period):
M1-active state, M2-inactive state, M3-active, M4-inactive state.

In this embodiment of the present invention, for the first control period Ti+1, the value of the first parameter associated to M2 indicates higher priority than the value of the first parameter associated to M4 and the value of the first parameter associated to M3 indicates lower priority than the value of the first parameter associated to M1.

For the rising edge of the required output signal at the start point of the second control period Ti+2, by applying step S 400, M2 is controlled so that its conduction state is switched at the start of the second control period (at the rising edge). Since M1 and M3 at the rising edge of the second control period Ti+2 maintain the conduction state from the first control period Ti+1, M1, M2 and M3 generate the required output voltage which has a rising edge from the second voltage level to the third voltage level (step 60 of the required output voltage) .

For the falling edge of the required output signal in the second control period Ti+2, by applying step S 400, M3 is controlled so that its conduction state is switched at the falling edge. Since M1 and M2 maintain the conduction state, M1 and M2 generate the base line 50 of the required output voltage. Hence, in the second control period Ti+2, two power converter modules (M2 and M3) switch the conduction state between an active state and an inactive state. In the prior-art solution, as elaborated above, three power converter modules (M1, M3 and M4) switch the conduction state between an active state and an inactive state.

For the control period Ti+3 being the second control periods, by applying step S 200, the following is determined for the end point of the control period Ti+2 (first control period):
M1-active state, M2-active state, M3-inactive, M4-inactive state.

In this embodiment of the present invention, for the first control period Ti+2, the value of the first parameter associated to M3 indicates higher priority than the value of the first parameter associated to M4 and the value of the first parameter associated to M1 indicates lower priority than the value of the first parameter associated to M2.

For the rising edge of the required output signal at the start point of the second control period Ti+3, by applying step S 400, M3 is controlled so that its conduction state is switched at the start of the second control period (at the rising edge). Since M1 and M2 at the start of the second control period Ti+3 maintain the conduction state from the first control period Ti+2, M1, M2 and M3 generate the required voltage which has a rising edge from the second voltage level to the third voltage level (step 60 of the required output voltage) .

For the falling edge of the required output signal in the second control period Ti+3, by applying step S 400, M1 is controlled so that its conduction state is switched at the falling edge. Since M2 and M3 maintain the conduction state, M2 and M3 generate the base line 50 of the required output voltage. Hence, in the second control period Ti+3, two power converter modules (M1 and M3) switch the conduction state between an active state and an inactive state. In the prior-art solution, as elaborated above, three power converter modules (M1, M3 and M4) switch the conduction state between an active state and an inactive state.

For the control period Ti+4 being the second control period, by applying step S 200, the following is determined for the end point of the period Ti+3 (first control period):
M1-inactive state, M2-active state, M3-active, M4-inactive state.

In this embodiment of the present invention, for the first control period Ti+3, the value of the first parameter associated to M1 indicates higher priority than the value of the first parameter associated to M4 and the value of the first parameter associated to M2 indicates lower priority than the value of the first parameter associated to M3.

For the rising edge of the required output signal at the start point of the second control period Ti+4, by applying step S 400, M1 is controlled so that its conduction state is switched at the start of the second control period (at the rising edge). Since M2 and M3 at the start of the second control period Ti+4 maintain the conduction state from the first control period Ti+3, M1, M2 and M3 generate the required voltage which has a rising edge from the second voltage level to the third voltage level (step 60 of the required output voltage) .

For the falling edge of the required output signal in the second control period Ti+4, by applying step S 400, M2 is controlled so that its conduction state is switched at the falling edge. Since M1 and M3 maintain the conduction state, M1 and M3 generate the base line 50 of the required output voltage. Hence, in the second control period Ti+4 two power converter modules (M1 and M2) switch the conduction state between an active state and an inactive state. In the prior-art solution, as elaborated above, three power converter modules (M1, M3 and M4) switch the conduction state between an active state and an inactive state.

Accordingly, one or more power converter modules, which are in an inactive conduction sate at the end point of the first control period and are associated, for the first control period, with a value of the first parameter indicating a higher priority than other one or more power converter modules which are in an inactive conduction sate at the end point of the first control period, are first to be utilised or scheduled for a rising edge of the required output voltage in the second control period by being turned on or placed in an active state. On the other hand, one or more power converter modules which are in an active state at the end point of the first control period and are associated, for the first control period, with a value of the first parameter indicating a lower priority than other one or more power converter modules which are in an active state at the end point of the first control period, are first to be turned off or placed in an inactive state for a falling edge of the required output voltage in the second control period. For modular multilevel converters with parallel connectivity, the power converter modules with a value of the first parameter indicating lower priority are first to be placed in a parallel configuration state or bypassed.

In each control period, none or one or more rising and falling edges using a counter or timer are precisely placed to thereby achieve a pulse width modulation to achieve high output voltage resolution. Hence, according to the present invention, events (rising edge or falling edge) in the required output voltage are scheduled. Selecting only inactive power converter modules to be turned on and only active power converter modules to be turned off inherently reduces the switching loss to minimum, thus eliminating the need to consider the switching loss in the priority list reducing thereby the computational effort and hence computational resources.

In one or more embodiments of the present invention, the steps of the method of figure 2 may be performed for each control period.

In one or more embodiments of the present invention, the method therefore may further comprise associating, for the second control period, an updated value of the first parameter to each one of the plurality of power converter modules 10_1, 10_2, 10_3, ..., 10_n and determining, for the end point of the second control period, the characteristic of the conduction state of each one of the plurality of power converter modules 10_1, 10_2, 10_3, ..., 10_n. In embodiments of the present invention in which the plurality of power converter modules 10_1, 10_2, 10_3, ..., 10_n are ordered based on the value of the first parameter associated to each one of the plurality of power converter modules 10_1, 10_2, 10_3, ..., 10_n for the first control period the method may further comprise re-ordering, for the second control period, the plurality of power converter modules 10_1, 10_2, 10_3, ..., 10_n based on the updated value of the first parameter.

For each subsequent control period, the associating of an updated value of the first parameter to each one of the plurality of power converter modules 10_1, 10_2, 10_3, ..., 10_n and the determining of the characteristic of the conduction state of each one of the plurality of power converter modules 10_1, 10_2, 10_3, ..., 10_n for the end point of the corresponding subsequent control period may be repeated. In embodiments of the present invention in which the plurality of power converter modules 10_1, 10_2, 10_3, ..., 10_n are ordered based on the value of the first parameter associated to each one of the plurality of power converter modules 10_1, 10_2, 10_3, ..., 10_n, the step of re-ordering of the plurality of power converter modules 10_1, 10_2, 10_3, ..., 10_n may be repeated. Hence, the value of the first parameter is variable in that it may be re-evaluated for each subsequent control period. The re-evaluation may lead to the updated value of the first parameter for one second control period being different than the value of the first parameter for a previous control period, however, it is possible that even after re-evaluating, the value of the first parameter for one control period remains the same as for a previous control period.

In other embodiments of the present invention, the associating of an updated value of the first parameter to each one of the plurality of power converter modules 10_1, 10_2, 10_3, ..., 10_n, and the determining of the characteristic of the conduction state of each one of the plurality of power converter modules 10_1, 10_2, 10_3, ..., 10_n for the end point of the corresponding subsequent control period and optionally the re-ordering of the plurality of power converter modules 10_1, 10_2, 10_3, ..., 10_n may be performed for groups of control periods. Such groups of control periods may form control cycles. For example, the associating of an updated value of the first parameter to each one of the plurality of power converter modules 10_1, 10_2, 10_3, ..., 10_n, the determining of the characteristic of the conduction state of each one of the plurality of power converter modules 10_1, 10_2, 10_3, ..., 10_n for the end point of the corresponding subsequent control period and optionally the re-ordering of the plurality of power converter modules 10_1, 10_2, 10_3, ..., 10_n - may be performed once for three consecutive control periods and then repeated again for the next three consecutive periods. In this example, three consecutive control periods may form one control cycle. This may reduce the computational load, however, may affect the balancing between the different power converter modules. In still other embodiments of the present invention, the determining of the characteristic of the conduction state of each one of the plurality of power converter modules 10_1, 10_2, 10_3, ..., 10_n for the end point of the corresponding subsequent control period and/or conduction time of each power converter module 10_i in each control period may be performed for each subsequent control period, however, the associating of an updated value of the first parameter to each one of the plurality of power converter modules 10_1, 10_2, 10_3, ..., 10_n, may be performed, for example for each n-th control period. Associating of an updated value of the first parameter to each one of the plurality of power converter modules 10_1, 10_2, 10_3, ..., 10_n, may be performed, for example for each n-th control period (for example once in 100 control periods) may save computational resources and may increase the speed of the control method.

In the following, determining the value of the first parameter will be explained in embodiments of the present invention.

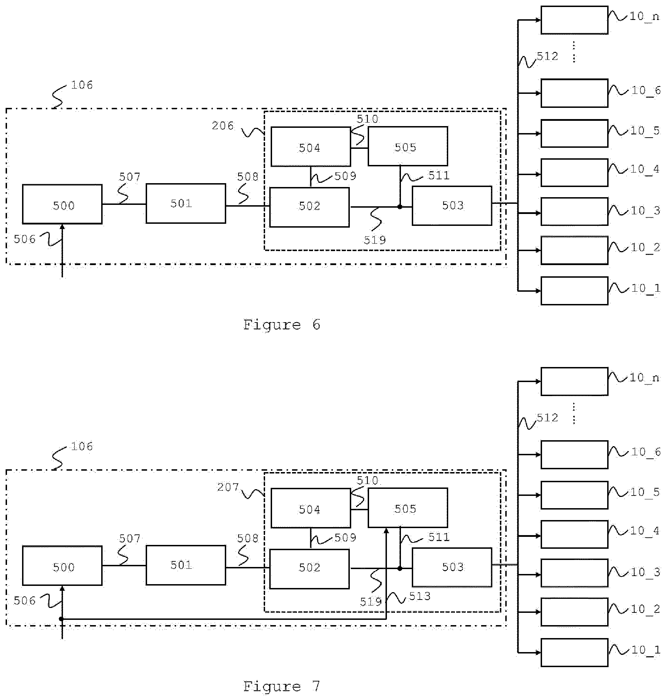

There is shown in figure 6 a control block diagram for carrying out the method for controlling the multilevel converter according to an embodiment of the present invention.

The control block diagram comprises a control unit 500, a module control unit 501, a module selector unit 502, a voltage synthesizer unit 503, a first parameter unit 504 and a module evaluation unit 505. The different units may communicate with each other to exchange information. The communication may be unidirectional or bidirectional. Further, there are shown in figure 6 the plurality of power converter modules 10_1, 10_2, 10_3, 10_4, 10_5, 10_6, ..., 10_n of the multilevel converter 1.

The different units may only be functional or logical units within one or more hardware units. There is shown in figure 6 with dashed dotted line 106 that the different units form a collection of units which may be understood to represent the minimum number of units (functional or logical) for carrying out the steps of the method of the embodiments of the present invention. In other words, the collection may be seen as a collection of units whose main purpose is determining how to produce the required output voltage of the multilevel converter and selecting (or scheduling) the power converter modules for generating the output voltage of the multilevel converter. In any case, at least one processing unit may carry out the function of each one or even all of the described units.

The at least one processing unit may be any suitable unit or comprise any suitable unit that can perform computer processing. The processing unit may comprise any of a micro processing unit (MCU), a field programmable gate array (FPGA) or application specific integrated circuit (ASIC), a complex programmable logic device (CPLD) or a combination thereof. The processing unit may comprise a storage unit, such as a memory (not shown in the figure). Alternatively, or additionally, one or more memories may be provided in addition to the at least one processing unit. The one or more memories may store different information required for the processing by the at least one processing unit.

The control unit 500 may be configured to generate an information regarding the duty ratio of the required output signal and send the generated information 507 to the module control unit 501. The control unit 500 may be configured to generate the information 507 regarding the duty ratio based on a feedback information 506. The feedback 506 may comprise one or more feedback parameters obtained from one or more sensors distributed in the system, for example the battery system in which the multilevel converter 1 is applied. The one or more feedback parameters may comprise at least one of voltage or current of the string of power converter modules, for example terminal current and/or terminal voltage of the power converter modules. Terminal current is the current flowing in/out of the terminal of the last power converter module in the string. Terminal voltage is the voltage at the terminal of the last power converter module in the string. However, the feedback 506 may be optional. In some embodiments of the present invention, alternatively or additionally, the control unit 500 may use information regarding the switch configuration in the string for generating the information regarding the duty ratio of the required output signal and send the generated information 507 to the module control unit 501. The switch configuration gives information regarding which power converter modules were exposed to current. For example, power converter modules which actively participated in the sharing of the workload were exposed to the current. On the other hand, power converter modules that were placed in a parallel configuration state were exposed to only a fraction of the current.

Moreover, the control unit 500 may optionally receive one or more other inputs (not shown in the figure) like required voltage/current, active power/reactive power and similar, apart from the feedback 506. The control unit 500 may use the one or more other inputs to generate the information regarding the duty ratio of the required output signal.

The module control unit 501 may be configured to determine the number of required power converter modules for generating the required output voltage signal of the multilevel converter 1 with the required duty ratio. The number of the required power converter modules may correspond to the total number of power converter modules of the multilevel converter 1 or may be a fraction of the total number of power converter modules of the multilevel converter 1.

The module control unit 501 may be configured to generate an information 508 regarding the number of required power converter modules and send this information to the module selector unit 502.

The first parameter unit 504 may be configured to determine the first parameter for each power converter module and to associate the first parameter to each power converter module. The association may be performed by way of a table or a list, as described above in embodiments of the present invention. The first parameter unit 504 may be configured to send information 509 to the module selector unit 502. The information 509 may be the first parameter determined for each one of the power converter modules or the association of the first parameter to the corresponding power converter module or information indicating the first parameter or the association. The first parameter unit 504 may exchange information with (receive from and/or send to) the module evaluation unit 505. The module evaluation unit 505 may evaluate the individual power converter modules based on one or more parameters specific to the individual power converter modules. For example, it may evaluate the conduction time of the individual power converter modules 10_1, 10_2, 10_3, ..., 10_n in one or more control periods. The module evaluation unit 505 may further be configured to determine the characteristic of the conduction state of each one of the power converter modules. However, this function may also be performed by the module selector unit 502.

The module selector unit 502 may be configured to select at least one power converter module for controlling the conduction state of the at least one power converter module in the second control period based on the information 509 received from the first parameter unit 504 and the characteristic of the conduction state of the at least one power converter modules.

The module selector unit 502 may be configured to generate an information regarding the selected at least one power converter module and send this information 519 to the voltage synthesizer unit 503. The generated information may also be sent as information 511 to the module evaluation unit 505. The information 519 may be an information representing or indicating the selected at least one power converter modules in the coming control period and may represent or indicate the scheduling of the selected at least one power converter modules.

The voltage synthesizer unit 503 may be configured to generate the control signal 512 to be sent to the at least one power converter module for controlling the conduction state of the at least one power converter module selected by the module selector unit 502. For power converter modules for which no change of the conduction state is required, the voltage synthesizer unit 503 may still be configured to generate a control signal 512 instructing the corresponding power converter modules that no change of the conduction state is required.

The voltage synthesizer unit 503 may be connected to the plurality of power converter modules 10_1, 10_2, 10_3, 10_4, 10_5, 10_6, ..., 10_n of the multilevel converter 1 via wires or a digital bus.

In this embodiment of the present invention, the module evaluation unit 505 may be configured to evaluate the power converter modules based on their conduction time in one or more preceding control periods or the current control period. The module evaluation unit 505 may send to the first parameter unit 504 information 510 indicating or representing the conduction times of the power converter modules. The first parameter unit 504 may be configured to determine the value of the first parameter for each of the plurality of power converter modules based on the conduction time of each of the plurality of power converter modules in the preceding control period or the current control period. The first parameter unit 504 may also arrange or order the power converter modules in an ascending or descending order of the first parameter. For the initial control period (for example at the start of the operation cycle of the multilevel converter 1 when the multilevel converter 1 is switched on), in an embodiment of the present invention, the value of the first parameter may be pre-configured or determined based on the conduction time of each of the plurality of power converter modules in a preceding operation cycle of the multilevel converter 1. In another embodiment of the present invention, for the initial state, an inspection and/or calibration of all or some of the components of the multilevel converter 1 can be performed. This may involve determining parameters like the state of charge, state of health, temperature, voltage, steady state current and similar. Based on at least one of these parameters, the value of the first parameter may be determined.

With this, the module selector unit 502, the first parameter unit 504, the module evaluation unit 505 and the voltage synthesizer unit 503 create a control mechanism (denoted with dashed line 206) with control loop, also called a fast control loop, since the necessary feedback, (in this embodiment, the conduction time of each of the plurality of power converter modules in the preceding control period or the current control period) is evaluated based on information processed within the control loop. In this embodiment of the present invention, since the conduction times are considered in determining the first parameter, the module evaluation unit 505 may balance between the conduction times of the different power converter modules and may evaluate the power converter modules by taking into account the balancing. For example, it may phase shift the operation of the individual power converter modules for balancing between the conduction times of the different power converter modules. In this case, the PWM may be seen as a phase shifted carrier PWM. The PSCPWM enables that the effective output switching rate is increased.

This control approach is also called an open loop control approach since the output of the multilevel converter 1 does not affect the input in the control loop.

There is shown in figure 7 a control block diagram for carrying out the method for controlling the multilevel converter according to an embodiment of the present invention. In this embodiment of the present invention, the same reference signs denote the same units and the same information as in the embodiment described with reference to figure 6.

In this embodiment of the present invention, in difference to the embodiment described with reference to figure 6, the feedback 506 that is sent to the control unit 500 may also be send as feedback 513 to the module evaluation unit 505. The feedback 506, 513 may comprise one or more feedback parameters obtained from one or more sensors distributed in the system in which the multilevel converter 1 is applied. The one or more feedback parameters may comprise at least one of voltage or current of the string of power converter modules, for example terminal current and/or terminal voltage of the power converter modules.

The module evaluation unit 505 may evaluate the power converter modules based on the conduction time as elaborated above and/or based on at least one first feedback parameter which is determined based on one or more feedback parameters obtained from the string of power converter modules to which the corresponding power converter module is connected. The module evaluate unit 505 may send to the first parameter unit 504 information 510 indicating or representing the conduction times of the power converter modules and/or the first feedback parameter. The first parameter unit 504 may be configured to determine the value of the first parameter for each of the plurality of power converter modules based on the received information 510 from the module evaluation unit 505.

In this embodiment of the present invention, the control loop of the control mechanism 207 may still be seen as a fast feedback loop. This feedback loop is also called closed loop approach since the output of the multilevel converter 1 affects the input in the control loop.

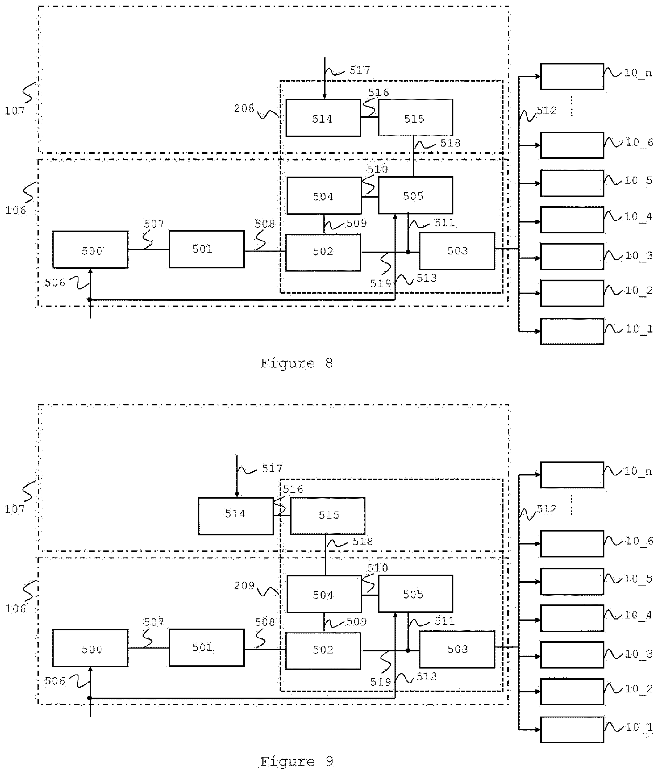

There is shown in figure 8 a control block diagram for carrying out the method for controlling the multilevel converter 1 according to an embodiment of the present invention. In this embodiment of the present invention, the same reference signs denote the same units and the same information as in the embodiment described with reference to figure 7 and figure 6.

In this embodiment of the present invention, the control block diagram includes a module load control unit 514 and an optimisation routine unit 515. In addition, the module evaluation unit 505 may perform the function of observing utilization of the modules and therefore in this embodiment of the present invention will be referred to as utilization observer unit 505. In this embodiment of the present invention, the module load control unit 514 and the optimisation routine unit 515 may be seen as building at least functionally or logically a different unit or a different collection (represented with a dashed dotted line 107) than the collection represented with the dashed dotted line 106 and described above.

In this embodiment of the present invention, the value of the first parameter for each of the plurality of power converter modules 10_1, 10_2, 10_3, 10_4, 10_5, 10_6, ..., 10_n may be determined based on at least one second feedback parameter. The at least one second feedback parameter may be determined based on one or more feedback parameters obtained from one or more of the plurality of energy sources 11. The one or more feedback parameter obtained from one or more of the plurality of energy sources 11 may comprise at least one of state of charge, temperature, voltage, current and state of health of the one or more of the plurality of energy sources. More specifically, the module load control unit 514 may receive as feedback information 517 the one or more feedback parameters obtained from one or more of the plurality of energy sources 11. The module load control unit 514 may, based on the received one or more feedback parameter obtained from one or more of the plurality of energy sources 11, generate an information 516 and send this information 516 to the optimisation routine unit 515. The generated information 516 may be or may represent the one or more feedback parameters obtained from one or more of the plurality of energy sources 11. The optimisation routine unit 515 may process the received information 515 and generate the at least one second feedback parameter.

The generation of the at least one second feedback parameter may be seen as slow feedback process since the at least one second parameter is generated based on feedback information which is based on parameters changing with a slower rate than the period of the control process.

The optimisation routine unit 515 may send as information 518 the generated at least one second feedback parameter to the utilization observer unit 505, which may generate the at least one first feedback parameter as elaborated above. The utilization observer unit 505 may send to the first parameter unit 504 the at least one second feedback parameter and/or the at least one first feedback parameter as information 510. Hence, the first parameter unit 504 may determine the value of the first parameter for each of the plurality of power converter modules based on the at least one first feedback parameter and/or the at least one second feedback parameter. This control mechanism 208 may be seen to represent a closed loop approach with fast feedback and slow feedback. The slow feedback may be seen as correcting the fast feedback.

There is shown in figure 9 a control block diagram for carrying out the method for controlling the multilevel converter according to an embodiment of the present invention. In this embodiment of the present invention, the same reference signs denote the same units and the same information as in the embodiment described with reference to figures 6, 7 and 8. In difference to the embodiment shown in figure 8, in this embodiment of the present invention, determining the value of the first parameter based on the at least one second feedback parameter is independent from determining the value of the first parameter based on the conduction time of each of the plurality of power converter modules in the preceding control period or the current conduction period and/or the at least one first feedback parameter. In other words, in this embodiment of the present invention, in the control mechanism 209 the first parameter unit 504 interacts with the optimisation routine unit 515 independently from the utilisation observer unit 505. Hence, the slow loop interacts with the first parameter unit 504 independently from the fast loop. The control mechanism 209 may be seen as a closed loop approach.

In one or more embodiments of the present invention, a third feedback parameter based on the combination of the one or more first feedback parameter and/or the one or more second feedback parameter and/or the conduction time may be obtained, and the value of the first parameter may be determined based on the third feedback parameter.

In one embodiment of the present invention, a multilevel converter 1 is provided comprising a plurality of energy sources 11 and a plurality of power converter modules 10_1, 10_2, 10_3, ..., 10_n, each power converter module comprising at least two switching elements, the multilevel converter 1 comprising means adapted to execute the steps of the method of the one or more embodiments described above.

Further, in one embodiment of the present invention, a computer program comprising instructions is provided, which, when the program is executed by a computer causes the computer to execute the steps of the method of the one or more embodiments described above. Such instructions may be stored in one or more memories.

Hence, according to the present invention, a modulation technique for a multilevel converter is provided which, instead of utilizing scheduling of power converter modules in each control period, utilizes scheduling of the power converter modules for events in each control periods. In scheduling for events in each control period, the present invention prioritizes power converter modules to be used and differentiates between the power converter modules based on the conduction state of the power converter modules in a preceding control period. This achieves balancing of the conduction times between the different power converter modules and reduces the number of switching of the conduction states of the individual power converter modules, thereby reducing the switching losses.

The present invention allows for a phase shifted operation, which effectively increases the effective output switching rate and introduces balancing capability, which cannot be achieved with the prior-art modulation techniques at the same time. Furthermore, the presented modulation technique does not introduce additional distortion at the power converter module switching rate and its harmonics.

Although detailed embodiments have been described, these only serve to provide a better understanding of the invention defined by the independent claims and are not to be seen as limiting.

## Claims

1. A method for controlling a multilevel converter comprising a plurality of energy sources and a plurality of power converter modules, each power converter module comprising at least two switching elements, the method comprising:
- associating, for a first control period from a plurality of consecutive control periods, a value of a first parameter to each one of the plurality of power converter modules, the value of the first parameter being a variable value;
- determining, for the end point of the first control period, a characteristic of the conduction state of each one of the plurality of power converter modules, the characteristic of the conduction state being one of a first predetermined characteristic and a second predetermined characteristic;
- obtaining a required output signal of the plurality of power converter modules for a second control period from the plurality of consecutive control periods, the second control period being after the first control period;
- for each change of the amplitude of the required output signal between a first amplitude level and a second amplitude level in the second control period, controlling the conduction state of at least one of the plurality of power converter modules in the second control period based on the value of the first parameter associated to the at least one power converter module for the first control period and the determined characteristic of the conduction state of the at least one power converter module for the end point of the first control period.

2. The method according to claim 1, wherein the controlling of the conduction state of the at least one of the plurality of power converter modules comprises any one of switching the conduction state of the at least one power converter module, placing the at least one power converter module in a parallel configuration state, placing the at least one power converter module in a bypassing state, and inverting the output voltage of the at least one power converter module.

3. The method according to any one of claim 1 and claim 2, wherein the first parameter indicates a priority of the corresponding power converter module for selecting the power converter module for controlling the conduction state of the corresponding power converter module in the second control period.

4. The method according to claim 3, wherein controlling the conduction state of the at least one of the plurality of power converter modules in the second control period comprises selecting the at least one of the plurality of power converter modules based on the priority of the at least one power converter module and the determined characteristic of the conduction state of the at least one power converter module for the end point of the first control period.

5. The method according to any one of claims 1 to 4, wherein the first predetermined characteristic of the conduction state indicates an active conduction state, and the second predetermined characteristic of the conduction state indicates an inactive conduction state, wherein the inactive conduction state is any one of a non-conduction state, a parallel configuration state and a bypassing state.

6. The method according to any one of claims 1 to 5, wherein the first amplitude level is lower than the second amplitude level, wherein for each change of the amplitude of the required output signal from the first level to the second level the method comprises:
- controlling the conduction state of one or more of the plurality of power converter modules for which the characteristic of the conduction state is the second predetermined characteristic.

7. The method according to claim 6, wherein the controlling comprises:
- selecting, in order from a value of the first parameter indicating the highest priority to a value of the first parameter indicating the lowest priority, one or more of the power converter modules for which the characteristic of the conduction state is the second predetermined characteristic, for controlling the conduction state of the selected one or more power converter modules.

8. The method according to any one of claims 1 to 7, wherein the first amplitude level is lower than the second amplitude level, wherein for each change of the amplitude of the required output signal from the second level to the first level the method comprises:
- controlling the conduction state of one or more of the power converter modules for which the characteristic of the conduction state is the first predetermined characteristic.

9. The method according to claim 8, wherein:
the controlling the conduction state of one or more of the power converter modules for which the characteristic of the conduction state is the first predetermined characteristic, comprises inverting the output voltage of the one or more of the power converter modules for which the characteristic of the conduction state is the first predetermined characteristic.

10. The method according to any one of claims 8 and 9, wherein the controlling comprises:
- selecting, in order from a value of the first parameter indicating the lowest priority to a value of the first parameter indicating the highest priority, one or more power converter modules for which the characteristic of the conduction state is the first predetermined characteristic, for controlling the conduction state of the selected one or more power converter modules.

11. The method according to any one of claims 1 to 10, further comprising:
- associating, for the second control period, an updated value of the first parameter to each one of the plurality of power converter modules, and
- determining, for the end point of the second control period, the characteristic of the conduction state of each one of the plurality of power converter modules.

12. The method according to claim 11, further comprising:
- repeating, for each subsequent control period, the associating of an updated value of the first parameter to each one of the plurality of power converter modules and the determining of the characteristic of the conduction state of each one of the plurality of power converter modules for the end point of the corresponding subsequent control period.

13. The method according to any one of claims 1 to 12, wherein the value of the first parameter for each of the plurality of power converter modules is determined based on the conduction time of each of the plurality of power converter modules in the preceding control period or the current control period.

14. The method according to any one of claims 1 to 13, wherein the value of the first parameter for each of the plurality of power converter modules is further determined based on at least one first feedback parameter which is determined based on one or more feedback parameters obtained from a string of power converter modules to which the corresponding power converter module is connected, wherein, preferably, the one or more feedback parameters obtained from the string of power converter modules comprise at least one of voltage or current of the string of power converter modules.

15. The method according to any one of claims 1 to 14, wherein the value of the first parameter for each of the plurality of power converter modules is determined based on at least one second feedback parameter, wherein the at least one second feedback parameter is determined based on one or more feedback parameters obtained from one or more of the plurality of energy sources, wherein, preferably, the one or more feedback parameters obtained from one or more of the plurality of energy sources comprise at least one of state of charge, temperature, voltage, current and state of health of the one or more of the plurality of energy sources.

16. The method according to any one of claims 14 and 15, further comprising obtaining a third feedback parameter based on the combination of the one or more first feedback parameter and/or the one or more second feedback parameter and/or the conduction time, and determining the value of the first parameter based on the third feedback parameter.

17. A multilevel converter comprising a plurality of energy sources and a plurality of power converter modules, each power converter module comprising at least two switching elements, the method comprising means adapted to carry out the steps of the method of claim 1.

18. A computer program comprising instructions which, when the program is executed on a computer causes the computer to execute the steps of the method of claim 1.
